# EUROPÄISCHE PATENTSCHRIFT

(11) **EP 0 396 885 B1**
(45) Veröffentlichungstag und Bekanntmachung des Hinweises auf die Patenterteilung: **21.04.1993**
(21) Anmeldenummer: 90105411.4
(22) Anmeldetag: 22.03.1990
(51) Int. Cl.: C09C 1/24

(54) **Verbesserte Eisenoxidschwarzpigmente, Verfahren zu ihrer Herstellung sowie deren Verwendung**
Improved black iron oxide pigments, their manufacture and their use
Pigments d'oxyde de fer noir, procédé de fabrication et utilisation

(30) Priorität: 04.04.1989 DE 3910783
(43) Veröffentlichungstag der Anmeldung: 14.11.1990
(73) Patentinhaber: BAYER AG, 51368 Leverkusen (DE)
(72) Erfinder: Rademachers, Jakob Dr., D-4150 Krefeld 12 (DE); Bockelmann, Wolfgang, Dr., D-4150 Krefeld 1 (DE); Burow, Wilfried, Dr., D-4150 Krefeld 1 (DE); Schäfer, Kurt, Dr., D-4150 Krefeld 1 (DE)

(56) Entgegenhaltungen:
- EP-A- 0 249 843
- CHEMICAL ABSTRACTS, vol. 58, no. 5, 04 März 1963 Columbus, Ohio, USA
- ULLMANNS ENZYKLOPAEDIE DER TECHNISCHEN CHEMIE (4.Auflage, Band 18, Seite 603, Verl.Chemie, Weinheim 1979).

## Beschreibung

Die vorliegende Erfindung betrifft verbesserte blaustichige nach dem Anilinverfahren erhaltene Eisenoxidschwarzpigmente hoher Farbstärke und guter Thermostabilität, Verfahren zu ihrer Herstellung sowie deren Verwendung.

Eisenoxidschwarzpigmente werden üblicherweise entweder nach dem Fällungsverfahren aus wäßrigen Eisensalzlösungen oder nach dem Nitrobenzolreduktionsverfahren aus metallischem Eisen hergestellt (Ullmanns Encyklopädie der technischen Chemie, 4. Auflage, Band 18, Seite 603, Verlag Chemie, Weinheim 1979). In beiden Prozessen fällt das Eisenoxidschwarzpigment in Form von wasserhaltigem Filterkuchen an, das anschließend getrocknet und gemahlen wird.

In der DE-A 3 620 333 werden Eisenoxidschwarzpigmente nach dem Nitrobenzolreduktionsverfahren beschrieben, die einer Temperaturbehandlung bei 200 bis 800° C unter einer nicht oxidierenden Atmosphäre ausgesetzt werden. Hierdurch können Eisenoxidschwarzpigmente mit hoher Farbstärke erhalten werden. Auch verbessert sich in gewünschter Weise die Farbqualität durch Verminderung des Brauntons bei Zunahme des Blaustichs.

In der Praxis hat sich jedoch gezeigt, daß nach diesem Verfahren Eisenoxidschwarzpigmente erhalten werden, die in der Thermostabilität nicht voll befriedigen.

Die Aufgabe der vorliegenden Erfindung besteht nun darin, Eisenoxidschwarzpigmente zur Verfügung zu stellen, die den beschriebenen Nachteil nicht aufweisen.

Es wurde gefunden, daß solche Eisenoxidschwarzpigmente erhalten werden können durch das erfindungsgemäße Verfahren zur Herstellung von nach dem Nitrobenzolreduktionsverfahren erhaltenen Eisenoxidschwarzpigmenten, welches dadurch gekennzeichnet ist, daß das Eisenoxidschwarzpigment in einer Endstufe bei Temperaturen von 400 bis 800° C, vorzugsweise 600 bis 700° C, in schwach oxidierender Atmosphäre getempert und gegebenenfalls gemahlen wird. Die oxidierende Atmosphäre läßt sich am vorteilhaftesten mit Luftsauerstoff in Höhe von 0,1 bis 3 Vol-%, vorzugsweise 0,3 bis 1,0 Vol-%, Sauerstoff einstellen.

Als Temperofen kann sowohl ein direkt beheizter wie auch ein indirekt beheizter Drehrohrofen mit Erfolg eingesetzt werden. Während beim indirekt beheizten Drehrohrofen die leicht oxidierende Atmosphäre durch getrennte Zuführung von Luft eingestellt werden kann, wird beim direkt befeuerten Ofen bevorzugt der Brenner mit der entsprechenden Luftüberschußmenge betrieben. Aber auch der indirekt beheizte Ofen kann aus einem separat arbeitenden Brenner zur Schutzgaserzeugung mit dem gewünschten Sauerstoffgehalt direkt beliefert werden. Auch ist es möglich, in die Öfen durch gezielte Einstellung des Unterdrucks entsprechende Luftmengen einzusaugen. Gewöhnlich wird aber eine Überdruckfahrweise bevorzugt.

Das Eisenoxidschwarz wird entweder in der Form des anfallenden Filterkuchens mit etwa 60 bis 70 Gew.-% Feststoffgehalt oder als getrocknetes Material der Temperstufe zugeführt.

Durch das erfindungsgemäße Verfahren werden in vorteilhafter Weise blaustichige Eisenoxidschwarzpigmente erhalten, die hohe Farbstärke und gute Thermostabilität aufweisen.

Gegenstand der Erfindung ist demnach auch das nach dem erfindungsgemäßen Verfahren erhaltene Eisenoxidschwarzpigment.

Die im folgenden beschriebenen Bestimmungsmethoden wurden wie folgt durchgeführt:
1) Farbmetrische Bestimmung der Farbabstände: Nach DIN 6174 (CIELAB-Werte). Bindemittel: Alkydal L 64 - Lack (Handelsprodukt der Bayer AG).
2) Farbstärke: Nach DIN 55 986. Weißausmischung mit der fünffachen Gewichtsmenge des TiO₂-Pigments Bayertitan R-KB 2, Bindemittel: Alkydal L 64 - Lack (beides Handelsprodukte der Bayer AG), Gleichstellungskriterium = Helligkeit.
3) Thermostabilität (Imcotest)
   1 l Produkt wird in einem Drahtnetzkubus aus Phosphorbronze gefüllt. Den gefüllten Kubus mit 100 mm Seitenlänge stellt man in die Mitte eines Labor-Ofens mit innerer Luftzirkulation. Der Ofen wird auf 110° C geheizt und bei dieser Temperatur 12 Stunden gehalten. Tritt im Inneren der Probe eine Temperatur über 200° C auf, so ist die Probe bei der gewählten Ofentemperatur (hier 110° C) nicht beständig.

Gegenstand dieser Erfindung ist auch die Verwendung der nach dem erfindungsgemäßen Verfahren erhaltenen Eisenoxidschwarzpigmente zur Einfärbung von Lacken, Kunststoffen und Baustoffen.

Anhand folgender Beispiele soll das Verfahren nach der Erfindung zur Herstellung von verbesserten Eisenoxidschwarzpigmenten näher erläutert werden.

### Beispiel 1

Einem direkt beheizten Drehrohrofen mit einer Länge von 12 m und einem lichten Durchmesser von 0,80 m wurden ein nach dem Nitrobenzolreduktionsverfahren erhaltenes, wasserhaltiges (10 % H₂O), braunstichiges Eisenoxidschwarzpigment (Vorprodukt für Bayferrox 120 N = Handelsprodukt der Bayer AG) stündlich in einer Menge von 200 kg zugeführt. Im Gegenstrom wurden Rauchgase aus der Verbrennung von 10,5 Nm³ /h Erdgas mit 95 Nm³ /h Luft durch den Ofen geleitet. Die Temperatur der Brennergase erniedrigte sich auf 680° C durch Beimischen von 195 Nm³ /h Inertgas (Stickstoff). Durch die Luftüberschußverbrennung von Erdgas (λ = 1,06) betrug der Sauerstoffgehalt 0,4 Vol-%. Die höchste Produkttemperatur betrug am Auslauf des Ofens 650° C. Nach der Kühlung unter Inertgas fiel ein Eisenoxidschwarzpigment mit einer Farbstärke von 148 %, bezogen auf Bayferrox 330 (Handelsprodukt der Bayer AG), an. Die Messung des Farbtons im Weißverschnitt zeigte einen Blaustich von Δb* = -0,5 im Vergleich mit Bayferrox 330.

In der Thermostabilitätsprüfung nach dem Imcotest war das erhaltene Pigment bei 110° C beständig. Es trat keine Temperaturerhöhung im Produkt innerhalb von 12 Stunden auf.

Ohne Luftüberschußverbrennung (89 anstelle 95 Nm³ /h Luft) wurde ein Pigment bei gleichem Blaustich und gleicher Farbstärke erhalten. Im Thermostabilitätstest wurde bei 110° C Ofentemperatur ein Anstieg der Temperatur im Produkt bis 650° C bereits nach 6 Stunden gemessen.

### Beispiel 2

Ein indirekter beheizter Drehrohrofen (Länge 2 m, Durchmesser 30 cm) wurde mit 40 kg/h des vollständig getrockneten Eisenoxidschwarzausgangspigmentes von Beispiel 1 beschickt. Im Ofen wurden bei 700°C 4 Nm³ /h Stickstoff, vermischt mit 140 l/h Luft (= 0,7 Vol.-% O₂), dem Feststoff entgegengeleitet. Nach dem Kühlen fiel ein Schwarzpigment mit einer Farbstärke von 140 %, bezogen auf Bayferrox 330 (Handelsprodukt der Bayer AG), an. Der Blaustich Δb* betrug zu dem selben Vergleichspigment -0,75 Einheiten. Das erhaltene Pigment war bei 110° C stabil.

Ohne Luftzufuhr zum Tempergas wurde bei sonst gleichen Bedingungen ein Schwarzpigment mit gleicher Farbstärke und gleichem Blaustich erhalten, das den Thermostabilitätstest bei 110° C nicht bestand.

## Patentansprüche

1. Verfahren zur Herstellung von nach dem Nitrobenzolreduktionsverfahren erhaltenen Eisenoxidschwarzpigmenten, dadurch gekennzeichnet, daß das Eisenoxidschwarz in einer Endstufe bei Temperaturen von 400 bis 800° C, vorzugsweise 600 bis 700° C, in schwach oxidierender Atmosphäre getempert und gegebenenfalls gemahlen wird.

2. Verfahren gemäß Anspruch 1, dadurch gekennzeichnet, daß die der Temperstufe zugeführten Gase in Höhe von 0,1 bis 3 Vol.%, bevorzugt 0,3 bis 1,0 Vol.%, Sauerstoff enthalten.

3. Verfahren gemäß Anspruch 1 und 2, dadurch gekennzeichnet, daß wasserhaltiges Eisenoxidschwarz mit Feststoffgehalten von 60 bis 99 Gew.-% zur Temperung gelangt.

4. Verfahren gemäß einem oder mehrerer der Ansprüche 1 bis 3, dadurch gekennzeichnet, daß die Temperung in direkt oder indirekt beheizten Drehrohröfen erfolgt.

5. Eisenoxidschwarzpigmente, erhalten nach einem oder mehrerer der Ansprüche 1 bis 4.

6. Verwendung der nach einem oder mehrerer der Ansprüche 1 bis 4 erhaltenen Eisenoxidschwarzpigmente für die Einfärbung von Lacken, Kunststoffen und Baustoffen.

## Claims

1. A process for the production of iron oxide black pigments obtained by the nitrobenzene reduction method, characterized in that, in a final stage, the iron oxide black is heated at temperatures of 400 to 800°C and preferably 600 to 700°C in a mildly oxidizing atmosphere and optionally ground.

2. A process as claimed in claim 1, characterized in that the gases delivered to the heating stage contain 0.1 to 3% by volume and preferably 0.3 to 1.0% by volume oxygen.

3. A process as claimed in claims 1 and 2, characterized in that water-containing iron oxide black with solids contents of 60 to 99% by weight is heated.

4. A process as claimed in one or more of claims 1 to 3, characterized in that heating is carried out in directly or indirectly heated rotating tube furnaces.

5. Iron oxide black pigments obtained by the process claimed in one or more of claims 1 to 4.

6. The use of the iron oxide black pigments obtained by the process claimed in one or more of claims 1 to 4 for pigmenting lacquers, plastics and building materials.

## Revendications

1. Procédé de production de pigments d'oxyde de fer noir obtenus par le procédé de réduction au nitrobenzène, caractérisé en ce que l'oxyde de fer noir est recuit dans une étape finale à des températures de 400 à 800°C, de préférence de 600 à 700°C en atmosphère légèrement oxydante, et il est éventuellement broyé.

2. Procédé suivant la revendication 1, caractérisé en ce que les gaz amenés à l'étape de recuit contiennent de l'oxygène en proportion de 0,1 à 3 % en volume, de préférence de 0,3 à 1,0 % en volume.

3. Procédé suivant les revendications 1 et 2, caractérisé en ce que l'oxyde de fer noir contenant de l'eau parvient au recuit avec des teneurs en matière solide de 60 à 99 % en poids.

4. Procédé suivant une ou plusieurs des revendications 1 à 3, caractérisé en ce que le recuit est effectué dans des fours tubulaires rotatifs chauffés directement ou indirectement.

5. Pigments à l'oxyde de fer noir, obtenus selon une ou plusieurs des revendications 1 à 4.

6. Utilisation des pigments à l'oxyde de fer noir obtenus selon une ou plusieurs des revendications 1 à 4 pour la coloration de peintures, de matières plastiques et de matériaux de construction.
